# EUROPEAN PATENT APPLICATION

(11) **EP 2 495 705 A1**
(43) Date of publication of application: **05.09.2012**
(21) Application number: 11171574.4
(22) Date of filing: 27.06.2011
(51) Int. Cl.: G07C 9/00, G07F 7/10, H04M 1/67

(54) **Secure personal identification**

(30) Priority: 01.03.2011 ZA 201101570
(71) Applicant: Frederico, Raul Maria Texeira, 9370-312 Faja D'Ovelha (PT)
(72) Inventor: Frederico, Raul Maria Texeira, 9370-312 Faja D'Ovelha (PT)
(74) Representative: Rees, Kerry

(57) **Abstract**

A person is identified securely before being allowed to conclude an electronically processed transaction, by storing biometric data of the person on a portable identification device (10), reading biometric data of the person on a biometric reader (18) on the device (10) and comparing the read biometric data and stored biometric date in circuitry (14) of the device (10), and transmitting a signal from the portable identification device via a wireless communication system, if the stored biometric data matches the biometric data read on the biometric reader (18), to a predetermined extent. The transmitted signal is received in a host server 32, which communicates with a transacting system or server (30,32) to allow the intended transaction to proceed.

## Description

### FIELD OF THE INVENTION

This invention relates to security when transacting and in particular, it relates to the secure identification of a person, with the aid of a portable device.

### BACKGROUND TO THE INVENTION

Conventional authentication processes when using plastic credit or debit cards requires account-holders to present a card with embedded identification such as embossed numbers, a magnetic strip, embedded chip, or the like, that links the card to a bank account. In addition, a second authentication step is required from the user in the form of a signature and/or pin-number before being allowed to transact and this process is known as two-factor authentication.

However, for internet transactions, two-factor authentication is not functionally practicable and in most cases, online purchases or online banking access require only a username, password and related account number and no card needs to be present. This "one-factor" approach to authentication is inherently vulnerable to criminal attacks, largely due to the absence of any need to present physical authentication.

Internet-based two-factor authentication systems are often costly to implement, cumbersome for the consumer to use, and often require additional hardware to be attached to computers. Attempts to improve security include sending a "one-time password" to a mobile telephone associated with the user, and other internet transacting and payment processes such as those known under trade names "VISA 3D Secure", "MasterCard SecureCode", etc., but these processes are complicated and time consuming and are disliked by users.

Statistics have shown that about 1.8 billion people have an Internet connection, globally, but about 75% of them do not transact online, either because they do not qualify for a payment card, or because they have security fears. The perception of a lack of security is a significant deterrent to user uptake of online banking processes. This is a significant inhibitor to the growth of online banking.

Further problems of current internet transacting methods include charge-backs, "phishing" and "pharming" and identity theft, all of which allow unauthorised access to funds by perpetrators who breach the identification processes used in current online transactions. Money-laundering, anti-social money movement and tax evasion are also rife due to the anonymity of "card-not-present" electronic payment systems, which allow criminals to move money easily. Some quasi-anonymous money transfer systems such as those known under trade names "PayPal" and "Western Union" can and have also been, hacked.

The present invention seeks to address the shortfalls mentioned above by providing a secure and convenient way to verify the identity of a person wishing to transact.

### SUMMARY OF THE INVENTION

According to one aspect of the present invention there is provided a method of secure identification of a person, said method comprising the steps of:
storing biometric data of the person on a portable identification device;
reading biometric data of the person on a biometric reader on the portable identification device;
comparing said biometric data stored on the portable identification device to the biometric data read on the biometric reader, in circuitry in the portable identification device; and
transmitting a signal from the portable identification device via a wireless communication system if the biometric data stored on the portable identification device matches the biometric data read on the biometric reader, to a predetermined extent.

Said method may include providing power to the portable identification device from a self contained power source, e.g. said power may be generated in a photovoltaic layer extending on the portable identification device and/or said power may be received during wireless communication with other devices via Near Field Communication (NFC).

The signal transmitted from the portable identification device may be a Short Message Service (SMS) signal or other signal, transmitted via a mobile telephone network, an NFC signal transmitted to an NFC enabled device, or other suitably secure wireless signal.

The method may include receiving the signal transmitted from the portable identification device in a server and transmitting an authorisation message to a transacting system such as a server hosting an online transaction, a computer system of financial institution, or the like.

The method may include prior steps of the person entering unique identification data such as a username or identification number, on the transacting system, and prompting the user to have the biometric data read on the biometric reader, and the method may include comparing the data entered by the person to the signal transmitted by the portable identification device, to verify the identity of the person.

According to another aspect of the present invention there is provided a portable identification device, said device including:
a biometric reader;
a storage medium configured to store biometric data;
a transmitter configured to transmit a signal via a wireless communication system; and
circuitry configured to compare read biometric data from the biometric reader, to stored biometric date on the storage medium and to transmit a signal via the wireless communication system if the read biometric data matches the stored biometric data to a predetermined extent.

The storage medium need not be a separate component, but may form part of the circuitry, e.g. the storage medium and circuitry may be housed in an integrated circuit, or the storage capacity may be included in the biometric scanner.

The portable identification device may include a power source that is self-contained in that it is configured to be energised during normal use of the device, e.g. the power source may include a photovoltaic layer extending on part of the outside of the portable identification device and/or the power source may include circuitry that is configured to receive power during wireless communication with other devices via (NFC).

According to another aspect of the present invention there is provided an identification system, said system comprising a portable identification device as described hereinabove, and at least one server configured to receive the signal transmitted from the portable identification device and to transmit an authorisation signal to a transacting system.

### BRIEF DESCRIPTION OF THE DRAWINGS

For a better understanding of the present invention, and to show how the same may be carried into effect, the invention will now be described by way of non-limiting example, with reference to the accompanying drawings in which:
Figure 1 is a diagrammatic representation of a portable identification device in accordance with the present invention;
Figure 2 is a diagrammatic representation of a first embodiment of an identification system in accordance with the present invention, when transacting online; and
Figure 3 is a diagrammatic representation of a second embodiment of an identification system in accordance with the present invention, when transacting through an NFC-enabled terminal.

### DETAILED DESCRIPTION OF THE DRAWINGS

Referring to the drawings, a portable identification device in accordance with the present invention is generally indicated with reference numeral 10 and is referred to herein below simply as the "device".

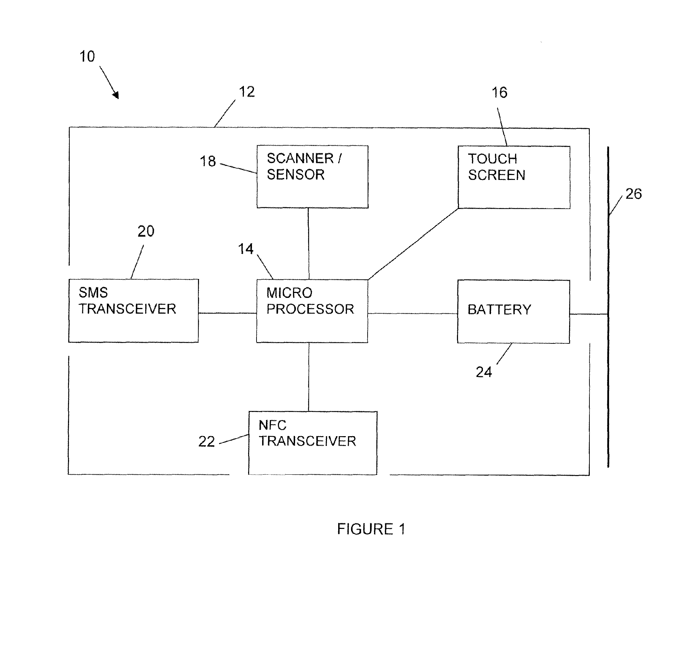

Referring to Figure 1, the device 10 includes a number of low profile, low power components that are housed in a small housing 12 that resembles the shape and size of a conventional credit card or a device small enough to be used as a key ring. To fit inside such a small housing 12, the components are obviously quite small and are configured in a very compact arrangement, but they are shown diagrammatically in the drawing, with no resemblance to their physical appearance.

The device 10 includes an integrated circuit ("chip") in the form of a multi-function microprocessor chip 14 that serves as data storage medium (memory) and that controls and executes the method of the present invention. The microprocessor chip 14 also contains transaction processing and communication routine algorithms and executable operating system instructions to manage all the functions associated with the method of the invention. The microprocessor chip 14 is commercially available from existing manufacturers, but it is loaded with software that includes communication routine algorithms and executable operating system instructions required for the present invention. The microprocessor chip 14 is also loaded with an encrypted character string token that can be used for server-side authorisation purposes (see below).

The device 10 includes a user interface in the form of an LED colour display screen 16 with an integrated touch-sensitive membrane. This screen 16 displays all communication between the microprocessor and the user.

The device 10 includes a biometric reader in the form of a fingerprint scanner sensor 18 which is connected via its associated circuitry to the microprocessor chip 14. Suitable sensors 18 are commercially available from a number of existing suppliers, including nano technology manufacturers. In other embodiments of the present invention, other biometric scanners can be used, e.g. image recognition scanners. In a preferred embodiment, the sensor 18 includes a data storage medium (memory), on which biometric data in the form of fingerprint data, can be stored.

The device 10 includes a transceiver 20 (combined transmitter and antenna) that includes a unique identifier module and that is configured to communicate via a conventional mobile telephone network by sending and receiving SMS signals. The antenna of the transceiver 20 is preferably incorporated in the periphery of the housing 12.

In addition to the transceiver 20, the device 10 includes an NFC transceiver 22 (including a chip and an antenna) that is configured to communicate using NFC protocols, with an NFC-enabled communications device, such as an NFC-enabled ATM.

Both the SMS transceiver 20 and the NFC transceiver 22 are connected to the microprocessor chip 14, so that SMS or NFC signals are transmitted under control of the microprocessor chip 14 and are received on the microprocessor chip.

In other embodiments, instead of an SMS transceiver 20 and/or an NFC transceiver 22, or in addition, the device 10 could include any suitable transmitter, preferably also a receiver, which can communicate securely and wirelessly.

The device 10 includes a power source which includes an ultra thin battery 24 and a thin photovoltaic sheet 26 on the outside of the device 10, which is configured to recharge the battery from impinging light, so that the battery and photovoltaic sheet form a self-contained power source for the device 10. As a result, the device 10 does not need to be provided with any connectors to external power sources, which allows it to be kept thin and to be made water tight ― with obvious advantages in durability and convenience.

In some embodiments, the device 10 is configured so that NFC signals received by the NFC transceiver 22 from external NFC-enabled systems, is used to charge the battery 24.

In some other embodiments of the invention, the photovoltaic sheet 26 is omitted and the battery 24 is a disposable battery, instead of being recharged. In these embodiments, the power source of the device 10 is still self-contained and does not require connection to an external power source.

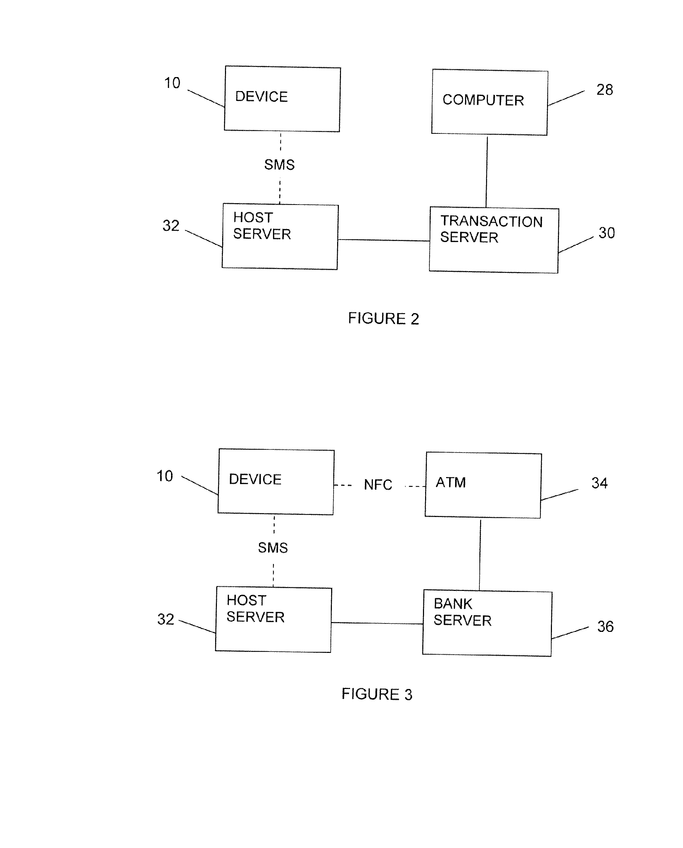

Referring to Figure 2, the device 10 can be used when transacting on-line, i.e. when a user uses a computer 28 (or an equivalent communication device) as user interface, which is connected via the internet to a transacting system or server, e.g. a server 30 hosting an online retail service or a bank. The transacting server 30 is connected to a host server 32 via the internet and the host server is configured to communicate with the device 10 via SMS.

Referring to Figure 3, the device 10 can be used when transacting at an NFC-enabled ATM 34, which is connected to a bank server 36-the ATM and bank server forming a transacting system, which is connected via the internet to the host server 32.

Descriptions of examples of practical use of the present invention are provided below, which refer to all the drawings. In the descriptions, terms such as "image" and "fingerprint" are used in common parlance, but as a person skilled in the art would realise, for the purposes of this description, when processing such an "image" or "fingerprint" in the device 10, it is actually biometric data relating to the image or fingerprint, that are being processed.

Prior to an authorised user of a new device 10 being able to use the device 10 for the first time, he is required to "register" his biometric data on the device's memory. The user is required to touch his thumb onto the surface of the sensor 18 until an image is stored. This thumb-image is subsequently used to access an Identifying Number (ID) of the device 10 in a process which unlocks and displays the device's ID number.

The user is then required to touch a finger of his choice to the sensor 18's surface until an image is stored. This finger-image is subsequently used in any transaction scenario, to activate the device 10 before permitting the transaction. Should the user so wish, an additional fingerprint image can be stored, for example to provide for the device 10 still being functional even if an injury is sustained to one finger (e.g. cuts or minor burns). The device 10 then locks the thumbprint and the fingerprints in its integrated memory and, once so locked, these cannot be changed.

The device 10 will now only recognise the fingerprint of the authorised user and for regular use thereafter, the device 10 requires that the authorised user touch his finger to the sensor 18. The user's fingerprint is then scanned and the information is checked against the record stored on the device 10's memory.

Two methods of using the device 10 in online banking will be described:
1. Where the device 10 has been issued by a specific bank and has remained locked for that bank exclusively: The authorised user touches his thumb to the sensor 18, which-upon a successful match - displays his device 10's ID together with a red indicator light strip which indicates that the user is not logged on but has merely retrieved the ID number. The user then goes to a website hosted on the host server 32 and enters his device 10's ID number in the appropriate field on the screen, whereupon the browser will be automatically redirected to the appropriate bank's logon screen, where the user will be further instructed.
2. Where a device 10 has been issued by one bank but has been unlocked for use at any bank registered by the authorised user: The authorised user touches his thumb to the device 10, which - upon a successful match - displays his device's ID together with a red indicator light strip which indicates that the user is not logged on but has merely retrieved the ID number. The user then goes to the website on the host server 32 and enters his device's ID number in the appropriate field on the screen. He is then asked to choose with which of his banks he wishes to transact and following his selection, his browser is automatically redirected to the appropriate bank's logon screen, where the user is instructed further.

The website hosted on the host server 32 verifies that the number is linked to a valid device 10 and automatically transmits a signal to the appropriate bank in preparation for a pending logon.

Once the user has been directed to the selected bank's site, the site prompts him to touch his finger to the sensor 18 so as to activate the device 10 for transaction purposes. If the fingerprint matches the fingerprint stored in the device 10, a green indicator light strip is displayed on the screen 16 and an encrypted SMS text message is transmitted from the SMS transceiver 20 to the bank's computer server 30. On positive match at the bank servers 30, together with the authorisation process on the bank's servers, this provides the authorised user with secure access for immediate transaction.

These methods of using the device 10 in online banking are effected instantly, or as fast as the mobile telephone networks permit and without the authorised user being aware of all of the method steps.

So, without the authorised user being present with his device 10 and activating his device with his finger, the authorised user's identity, bank account and funds cannot be accessed.

The processes that take place at the host server 32 include: When a device 10's ID is entered via the website hosted on the host server, this information is received on the host server for validation, to ensure that the device 10 is genuine and is not a counterfeit. This information is then transmitted directly from the host server 32 to the issuing bank's server 30.

The processes that take place at the bank's servers 30 include: When the device 10 is activated by the authorised user, the resultant SMS containing an authentication token is sent to the bank's processing servers 30. The device 10's authentication token consists of a string of characters in encrypted form with PKI encryption algorithms. This token is resident on each device 10 and is unique to each device 10. The authentication token is decrypted using a PKI decryption algorithm and is compared to a batch of device 10-specific character string combinations issued to that specific bank. If a valid match is found, the authorised user is identified and provided with secure access to his online banking service.

The present invention minimises the risk of hacking by using the combination of the requirement of the positive match provided by the host server 32, the strong encryption of the authentication token and the device 10-specific unique character strings. In addition, the user's encrypted character string can only be accessed by using the user's fingerprint and can only be sent from the device 10 with its unique ID number.

The device 10 can be used when making payments for online shopping or e-commerce. When the authorised user arrives at the secure payment page of the relevant website, he enters his device 10's number (and other appropriate details if required). The user clicks "Submit" and the requested online transaction transmits a request to the issuing bank's server 30 for user funds authorisation. The server 30 returns a request to the website for the user to activate his device 10. Once the user's data is validated through the standard authorisation process described above, the transaction proceeds as normal.

It is important to note that no merchant site needs to be modified to implement the present invention. Each payment processing company or issuing bank that wishes to implement the invention merely needs to add a payment module in accordance with the invention, to their servers 30, a function that in no way requires any adaptation of either the merchants systems or the existing payment networks.

The device 10 can be used when making payments for land-based transacting purposes. When the authorised user wishes to transact at a payment point equipped with contactless payment capabilities or an ATM 34 equipped with NFC capabilities, he activates his device 10 and NFC communication occurs between the device 10 and the payment point device or ATM 34, allowing for the transaction to proceed. By activating his device 10 and then "presenting" it to the NFC payment terminal, the authorised user can pay for goods securely. Similarly, the device 10 can be used at an ATM 34 without the need for actually inserting a card into the ATM slot and needing to enter a user PIN. Simply by activating his device 10, the authorised user can bypass the initial steps to transacting at the ATM. This improves security by minimising the risk of card-skimming or card replicating fraud. This functionality can be applied to all NFC payment points, be they retail merchants, services providers, ATMs, other cash-dispensing devices, or the like.

The device 10 can be used when in other financial activities such as balance enquiries and/or related account enquiries, switching from one bank to another, or peer-to-peer payments.

Balance enquiries and related account queries: Using cellular telephone communications, an authorised user can use his activated device 10 to conduct two-way communications with his bank, enabling him to obtain account balances, transaction histories, etc. This information can be downloaded to his device 10 and displayed on the device's screen 16.

Switching from one bank account to another: Using cellular communications, an authorised user can use his activated device 10 to switch from one bank account to another, for example from his debit card account to his savings account or his credit card account. Thus, the device 10 incorporates the functions of both debit card and credit card in one device. Additionally, it is possible to switch from one bank to another bank, by selecting from a list of the authorised user's registered banks displayed on the device 10's display screen 16.

Peer-to-peer payments: Using NFC, one authorised user can use his activated device 10 to transfer funds to another within-range activated device 10. Apart from facilitating the transfer of money from, for example, parent to child, this functionality will facilitate the acceptance of secure payments by small-business operators from their clients.

The device 10 can also facilitate diverse applications in numerous "vertical" markets, such as secure network logon and user password replacement, because it provides very secure authentication for accessing confidential data.

In addition to the advantages apparent from the description herein above, the present invention holds the further advantages that it:
eliminates the need for multiple profile numbers, usernames, passwords and follow-up One Time Passwords that can be phished, pharmed, hacked, etc.;
is very simple and convenient for the user;
substantially shortens the process of online banking logon and online shopping payment; and
proves the identity of the transacting party for the bank.

## Claims

1. A method of secure identification of a person, said method comprising the steps of:
storing biometric data of the person on a portable identification device (10);
reading biometric data of the person on a biometric reader (18) on the portable identification device;
comparing said biometric data stored on the portable identification device to the biometric data read on the biometric reader, in circuitry (14) in the portable identification device; and
transmitting a signal from the portable identification device via a wireless communication system if the biometric data stored on the portable identification device matches the biometric data read on the biometric reader, to a predetermined extent.

2. A method as claimed in claim 1, which includes providing power to the portable identification device (10) from a self contained power source (24,26).

3. A method as claimed in claim 2, which includes generating said power in a photovoltaic layer (26) extending on the portable identification device (10).

4. A method as claimed in claim 2, which includes receiving said power during wireless communication with other devices (34) via Near Field Communication (NFC).

5. A method as claimed in any one of the preceding claims, wherein the signal transmitted from the portable identification device (10) is a secure wireless signal.

6. A method as claimed in claim 5, wherein said secure wireless signal is transmitted via a mobile telephone network.

7. A method as claimed in claim 5, wherein said secure wireless signal is transmitted to an NFC enabled device (34).

8. A method as claimed in any one of the preceding claims, which includes receiving said signal transmitted from the portable identification device (10) in a server (32) and transmitting an authorisation message to a transacting system (30,36).

9. A method as claimed in claim 8, which includes the prior steps of entering unique identification data on the transacting system (30,36), and prompting the user to have the biometric data read on the biometric reader (18).

10. A method as claimed in claim 9, which includes comparing the data entered by the person to the signal transmitted by the portable identification device (10), to verify the identity of the person.

11. A portable identification device (10), said device including:
a biometric reader (18);
a storage medium configured to store biometric data;
a transmitter (20,22) configured to transmit a signal via a wireless communication system; and
circuitry (14) configured to compare read biometric data from the biometric reader, to stored biometric date on the storage medium and to transmit a signal via the wireless communication system if the read biometric data matches the stored biometric data to a predetermined extent.

12. A portable identification device (10) as claimed in claim 11, wherein the storage medium forms part of the circuitry (14).

13. A portable identification device (10) as claimed in claim 12, wherein the storage medium is included in the biometric scanner (18).

14. A portable identification device (10) as claimed in claim 11 or claim 12, which includes a power source (24,26) that is self-contained in that it is configured to be energised during normal use of the device.

15. An identification system, said system comprising a portable identification device (10) as claimed in any one of claims 11 to 14, and at least one server (32) configured to receive the signal transmitted from the portable identification device and to transmit an authorisation signal to a transacting system (30,36).
